# EUROPÄISCHE PATENTSCHRIFT

(11) **EP 2 166 207 B1**
(45) Veröffentlichungstag und Bekanntmachung des Hinweises auf die Patenterteilung: **29.09.2010**
(21) Anmeldenummer: 09009539.9
(22) Anmeldetag: 23.07.2009
(51) Int. Cl.: F01N 3/20, F02B 37/00

(54) **Vorrichtung und Verfahren zur Reinigung eines Abgasstroms einer Brennkraftmaschine, insbesondere einer magerlauffähigen Brennkraftmaschine**
Device and method for cleaning an exhaust gas flow of an internal combustion engine, in particular an lean burning internal combustion engine
Dispositif et procédé de purification d'un flux de gaz d'échappement d'un moteur à combustion interne, notamment d'un moteur à combustion interne à mélange pauvre

(30) Priorität: 23.09.2008 DE 102008048428
(43) Veröffentlichungstag der Anmeldung: 24.03.2010
(73) Patentinhaber: MAN Nutzfahrzeuge AG, 80995 München (DE)
(72) Erfinder: Döring, Andreas, 80339 München (DE)

(56) Entgegenhaltungen:
- EP-A2- 0 878 608
- EP-A2- 1 092 466
- EP-A2- 1 481 719

## Beschreibung

Die Erfindung betrifft eine Vorrichtung zur Reinigung eines Abgasstroms einer Brennkraftmaschine, insbesondere einer magerlauffähigen Brennkraftmaschine, nach dem Oberbegriff des Anspruchs 1. Ferner betrifft die Erfindung ein Verfahren zur Reinigung eines Abgasstroms einer Brennkraftmaschine, insbesondere einer magerlauffähigen Brennkraftmaschine, nach dem Oberbegriff des Anspruchs 19.

Der Einsatz von SCR-Katalysatoren zur Reduzierung der Stickoxide in einem Abgasstrom einer Brennkraftmaschine ist allgemein bekannt. Im Rahmen der mit diesen SCR-Katalysatoren durchgeführten selektiven katalytischen Reduktion (SCR) wird dem Abgasstrom eine unmittelbar reduzierend wirkende Substanz, wie beispielsweise Ammoniak oder ein Vorprodukt zugeführt, das erst im Abgas reduzierende Substanzen freisetzt. Als Vorprodukt kann beispielsweise eine wässrige Hahnstofflösung verwendet werden.

Bei in Kraftfahrzeugen betriebenen Brennkraftmaschinen gestaltet sich die Stickoxidreduzierung mit Hilfe des SCR-Verfahrens deshalb schwierig, weil dort wechselnde Betriebsbedingungen vorherrschen, was die mengenmäßige Zumessung des Reduktionsmittels erschwert. Es soll zwar einerseits ein möglichst hoher Umsatz an Stickoxiden erreicht werden, andererseits ist aber auch darauf zu achten, dass es nicht zur unnötigen Emission von unverbrauchtem Reduktionsmittel, wie beispielsweise Ammoniak kommt.

Im Zusammenhang mit der Zersetzung von Harnstoff in Ammoniak ist es bekannt, dass dies unter optimalen Bedingungen, d. h. Temperaturen über 350°C, in zwei Stufen geschieht. Nach

(NH₂)₂ CO → NH₃+ HNCO

erfolgt zunächst die Thermolyse, d. h. die thermische Zersetzung von Harnstoff. Anschließend erfolgt nach

HNCO +H₂O → NH₃ + CO₂

die Hydrolyse, also die katalytische Zersetzung von Isocyansäure (HNCO) in Ammoniak (NH₃) und Kohlendioxid (CO₂).

Da das Reduktionsmittel bei der z. B. Verwendung der als AdBlue bezeichneten Reduktionsflüssigkeit in einer in Wasser gelösten Form vorliegt, muss dieses Wasser vor und während der eigentlichen Thermolyse und Hydrolyse verdampfen. Liegen bei den beiden vorstehenden Reaktionen die Temperaturen unter 350°C bzw. wird nur langsam erhitzt, bildet sich hauptsächlich feste unschmelzbare Cyanursäure durch Trimerisierung der Isocyansäure, was zur Verstopfung des SCR-Katalysators führt. Abhilfe kann hier, wie in der DE 40 38 054 A1 beschrieben, dadurch geschaffen werden, dass der mit dem Reduktionsmittel beladene Abgasstrom über einen Hydrolysekatalysator geführt wird. Die Abgastemperatur, bei der eine quantitative Hydrolyse möglich wird, lässt sich so auf 160°C absenken.

Um die Katalysatoren zu verkleinern, aber die Verweilzeit in den Katalysatoren konstant zu lassen, können die Hydrolysekatalysatoren auch in einem Abgasteilstrom betrieben werden, der dem Abgasstrom entnommen und nach erfolgter Hydrolyse diesem wieder zugeführt wird. Eine entsprechende Anordnung ist der EP 1052009 A1 zu entnehmen. Allerdings löst dieses Verfahren bei zu niedrigen Abgastemperaturen das Problem der nur teilweisen Harnstoffhydrolyse noch nicht vollständig.

Daher ist es vorteilhaft, dass die Entnahme des Abgasteilstroms möglichst motornah erfolgt, um den Hydrolysekatalysator auf einem hohen Temperaturniveau betreiben zu können. Bei abgasaufgeladenen Brennkraftmaschinen ist es weiter vorteilhaft, den Abgasteilstrom bereits vor dem Turbolader zu entnehmen und ihn stromab des Turboladers wieder zurückzuführen. Allerdings ergibt sich bei der motornahen Entnahme des Abgasteilstroms und der Zudosierung des Reduktionsmittels ein Problem. Bei bestimmten Betriebszuständen der Brennkraftmaschine, hauptsächlich im Schwachlast-, Schub-, Motorbremsbetrieb, in Leerlaufphasen oder beim Abstellen des Motors, kann eine Umkehr der Strömungsrichtung des Abgases eintreten, so dass Reduktionsmittel, aus dem Reduktionsmittel abgespaltener Ammoniak oder aus dem Reduktionsmittel gebildete Nebenprodukte, wie beispielsweise Isocyansäure, Cyanursäure usw., durch Rückströmungen und/oder Diffusion in Richtung Motorblock, mit den abgasberührten Teilen des Motors in Berührung kommen können. Dies kann zur Korrosion der dort verbauten Materialien insbesondere der Dichtungen führen.

Aus diesem Grund ist in DE 10 2006 038 289 A1 beschrieben, im Strömungsverlauf des Abgasteilstroms allerdings stromauf der Zudosiereinrichtung für das Reduktionsmittel in den Abgasteilstrom einen Oxidationskatalysator anzuordnen, der bei den Motorbetriebsbedingungen, bei denen eine Umkehr des Abgasstroms in Richtung Brennkraftmaschine gegeben ist, zurückströmendes Ammoniak und/oder zurückströmende Reduktionsmittel-Zersetzungsprodukte oxidiert. Das angesprochenen Verfahren mit der Abgasentnahme stromauf der Abgasturbine führt zu einer Verschlechterung des Wirkungsgrades der Ladegruppe und damit der gesamten Brennkraftmaschine, da die treibende Druckdifferenz zwischen dem Bereich stromauf und stromab der Abgasturbine absinkt.

Das Dokument EP 1 092 466 zeigt eine Vorrichtung bzw. ein verfahren gemäß dem Oberbegriff der Ansprüche 1 und 19.

Es ist daher Aufgabe der vorliegenden Erfindung, eine Vorrichtung und ein Verfahren zur Reinigung eines Abgasstroms einer Brennkraftmaschine, insbesondere einer magerlauffähigen Brennkraftmaschine, für Fahrzeuge, insbesondere für Nutzfahrzeuge, zur Verfügung zu stellen, mittels der bzw. dem auf einfach und funktionssichere Weise eine quantitative bzw. definierte Zersetzung des Reduktionsmittels gewährleistet wird, ohne den Wirkungsgrad einer Brennkraftmaschine nennenswert zu verschlechtern.

Diese Aufgabe bezüglich der Vorrichtung gelöst mit den Merkmalen des Anspruchs 1. Bezüglich des Verfahrens wird diese Aufgabe gelöst mit den Merkmalen des Anspruchs 19. Vorteilhafte Ausbildungen sind Gegenstand der Unteransprüche.

Gemäß Anspruch 1 weist die Vorrichtung zur Reinigung eines Abgasstroms einer Brennkraftmaschine insbesondere einer magerlauffähigen

Brennkraftmaschine, wenigstens einen in einem Abgasstrang einer Brennkraftmaschine angeordneten SCR-Katalysator auf, wobei sich eine Abgasleitung stromauf des SCR-Katalysators an einer Abzweigstelle in eine Teilstrom-Abgasleitung und in eine Reststrom-Abgasleitung aufzweigt. Die Teilstrom-Abgasleitung ist mit einer Reduktionsmittel-Zudosiervorrichtung zur Zudosierung eines Reduktionsmittels in den in der Teilstrom-Abgasleitung geführten Abgasteilstrom gekoppelt. Ferner werden die Teilstrom-Abgasleitung und die Reststrom-Abgasleitung stromab der Abzweigstelle und stromauf des wenigstens einen SCR-Katalysators an einer Zuführstelle wieder zu einer Abgasleitung zusammengeführt. Erfindungsgemäß ist die Teilstrom-Abgasleitung thermisch mit wenigstens einer, einen heißen Abgasstrom zu einer Abgasturbine eines Abgasturboladers führenden Turbinenleitung gekoppelt.

Durch die Teilstromabzweigung stromab des Abgasturboladers wird der Wirkungsgrad der Ladegruppe und damit der gesamten Brennkraftmaschine nicht verschlechtert. Da die Abgastemperatur stromab der Abgasturbine für eine gewünschte Zersetzung des Reduktionsmittels allerdings nicht ausreichend ist, wird für die Beheizung des stromab abgezweigten Abgasteilstroms vorteilhaft die thermische Ankopplung an den heißen Abgasstrom stromauf der Abgasturbine vorgenommen, wo regelmäßig Temperaturen von bis zu 300°C höher als stromab des Turboladers vorliegen. Damit gelingt durch diese optimierte Vorrichtung bzw. Verfahrensführung eine nahezu wirkungsgradneutrale Aufheizung des Teilstroms, da keine Abzweigung des Teilstroms mehr vor dem Abgasturbolader erfolgt, sondern lediglich noch eine thermische Ankopplung.

Diese thermische Ankopplung kann auf mehrere Arten erfolgen, wobei die Teilstrom-Abgasleitung und die wenigstens eine Turbinenleitung zur thermischen Kopplung entlang einer vorgegebenen Erstreckungslänge jedesmal eine Wärmetauscheranordnung ausbilden oder Bestandteil einer Wärmetauscheranordnung sind:

So können beispielsweise die Teilstrom-Abgasleitung und die wenigstens eine Turbinenleitung gemäß einer ersten Ausführungsform entlang einer vorgegebenen Erstreckungslänge in einer Anlageverbindung aneinander anliegen, so dass der Wärmeübergang alleine durch Wärmeleitung innerhalb und zwischen den beiden Rohrleitungen stattfindet. Dies stellt eine einfache und kostengünstige Variante dar. Bevorzugt ist diese Anordnung zudem gegenüber der Außenumgebung thermisch isoliert, um hohe Wärmeverluste an die Umgebung zu vermeiden. Insgesamt eignet sich dies Variante vor allem für diejenigen Anwendungsfälle, in denen keine großen Temperaturerhöhungen im Abgasteilstrom notwendig sind.

Gemäß einer weiteren alternativen Ausgestaltung ist die wenigstens eine Turbinenleitung entlang einer vorgegebenen Erstreckungslänge, insbesondere im Bereich eines Abgassammlers bzw. Abgaskrümmers, doppelwandig mit einem die Teilstrom-Abgasleitung ausbildenden Wandhohlraum ausgebildet. Der Teilabgasstrom strömt hier dann im Mantelbereich der Turbinenleitung. Dies gelingt besonders einfach bei einer gegossenen Ausführung des zwischen dem Zylinderkopf und dem Abgasturbolader angebrachten Abgassammlers, da in diesen die Teil-Abgasleitung einfachst als Doppelwand durch Gießen integriert werden kann.

Die aus thermischer Sicht beste Lösung stellt allerdings die Umströmung und/oder Durchströmung des kalten Abgasteilstroms mit dem heißen Abgas vor dem Turbolader dar. Hierbei kann die Teilstrom-Abgasleitung entlang einer vorgegebenen Erstreckungslänge derart in die Turbinenleitung einmünden und innerhalb dieser verlaufen, dass die Teilstrom-Abgasleitung vom heißen Abgasstrom umströmt wird. Auch die umgekehrte Variante ist denkbar, nämlich dass wenigstens eine Turbinenleitung entlang einer vorgegebenen Erstreckungslänge in die Teilstrom-Abgasleitung mündet und innerhalb dieser verläuft sowie den kalten Abgasteilstrom durchströmt. Diese Variante ist besonders vorteilhaft, da hierdurch die thermischen Verluste an die Umgebung auf Grund des niedrigeren Temperaturgefälles zwischen dem, im Vergleich, kälteren Abgasteilstrom und der Umgebung geringer sind.

Gemäß einer weiteren Ausführungsvariante, die ggf. auch zusätzlich mit den zuvor genannten Ausgestaltungen realisierbar ist, ist die Turbinenleitung stromauf der Abgasturbine mehrflutig ausgebildet und bildet wenigstens eine der Zweigleitungen die mit der Teilstrom-Abgasleitung thermisch gekoppelte Turbinenleitung aus. Bevorzugt ist hierbei eine einzige die thermisch gekoppelte Turbinenleitung ausbildende Zweigleitung vorgesehen, wobei in der Zweigleitung zudem wenigstens ein mittels einer Steuer- und/oder Regeleinrichtung ansteuerbares Zweigleitungs-Absperrelement angeordnet ist, mittels dem die Zweigleitung zu vorgegebenen Zeiten in der gewünschten Weise freigegeben oder geschlossen werden kann. Bevorzugt ist das Absperrelement als Drossel, Ventil und/oder Verschlussklappe oder dergleichen ausgebildet. Damit lassen sich die in der Abgasteilstromstrecke vorherrschenden Temperaturen optimal einstellen.

Gemäß einer hierzu ersten Ausführungsvariante sind die Zweigleitungen stromauf der Abgasturbine wieder zu einer einzigen Turbinenleitung zusammengeführt. Alternativ dazu kann die Abgasturbine aber auch mehrflutig, insbesondere zweiflutig, von den Zweigleitungen gespeist sein. Die Zweigleitungen sind dabei unterschiedlichen Zylindern oder unterschiedlichen Zylindergruppen der Brennkraftmaschine zugeordnet, wobei der oder die Zylinder derjenigen Zweigleitung, die mit der Teilstrom-Abgasleitung thermisch gekoppelt ist, wenigstens zeitweise mit gegenüber den anderen Zylindern derjenigen Zweigleitungen, die nicht mit der Teilstrom-Abgasleitung thermisch gekoppelt ist bzw. sind, anderen Betriebsparametern betrieben ist. Dadurch können die Verhältnisse im Abgasteilstrom hinsichtlich der Aufbereitung und Zersetzung des Reduktionsmittels besonders vorteilhaft optimiert werden, indem beispielsweise die Abgastemperatur in der Startphase oder im Niedriglastbereich in der entsprechenden Flut angehoben wird.

Handelt es sich um eine Brennkraftmaschine mit zwei Abgasturboladern, wobei die Abgasturbine des einen Abgasturboladers z. B. von einer ersten Zylinderbank der Brennkraftmaschine und die Abgasturbine des anderen Abgasturboladers z. B. von einer zweiten Zylinderbank der Brennkraftmaschine mit Abgas beschickt wird, ist es vorteilhaft, wenn der Abgasteilstrom stromab der Abgasturbine eines der beiden Abgasturbolader vom Abgasstrom abgezweigt wird. Die Zylinder der Zylinderbank von deren Abgastrakt der Abgasteilstrom abzweigt, können dann mit anderen Betriebsparametern bzw. Motorparametern betrieben werden als die Zylinder der anderen Zylinderbank. Auf diese Weise wird auch hier eine vorteilhafte Optimierung der Verhältnisse im Abgasteilstrom hinsichtlich der Aufbereitung bzw. Zersetzung des Reduktionsmittels möglich, indem beispielsweise die Abgastemperatur in der Startphase oder im Niedriglastbereich wiederum angehoben wird. Anstelle unterschiedlicher Zylinderbänke können in analoger Weise auch unterschiedliche Zylindergruppen vorgesehen werden.

Der Abgasteilstrom, in dem das Reduktionsmittel zudosiert wurde, wird stromab des Turboladers und stromauf des wenigstens eines SCR-Katalysators wieder in den Abgasstrom zurückgeführt, wie dies bereits zuvor erläutert worden ist. Der stromab der Zuführ- bzw. Rückführstelle angeordnete SCR-Katalysator reduziert dann die im Abgasstrom enthaltenen Stickoxide mit Hilfe des abgespaltenen Ammoniaks im Wege der selektiven katalytischen Reduktion zu Stickstoff und Wasserdampf.

Das erfindungsgemäße Abgasnachbehandlungssystem erlaubt es somit in vorteilhafter Weise einerseits, das Reduktionsmittel quantitativ zu zersetzen, ohne den Wirkungsgrad der Brennkraftmaschine nennenswert zu verschlechtern. Andererseits wird ohne zusätzlichen, insbesondere ohne steuerungs- oder regelungstechnischen Aufwand verhindert, dass der durch den bei bestimmten Betriebsbedingungen der Brennkraftmaschine gegebene Rückstrom von Abgasen, Ammoniak oder Reduktionsmittel oder die aus dem Reduktionsmittel gebildeten Nebenprodukte mit abgasberührten Teilen der Brennkraftmaschine in Kontakt kommen; dies verhindert der Abgasturbolader ähnlich einem Rückschlagventil, so dass diese vor einer dadurch bedingten Korrosion geschützt sind.

Zur Begünstigung der Abspaltung von Ammoniak aus dem Reduktionsmittel kann stromab einer Reduktionsmittel-Zudosierstelle und stromauf der Zuführstelle in den Restabgasstrom wenigstens ein Hydrolyse-Katalysator zur Hydrolyse des Reduktionsmittels in der Teilstrom-Abgasleitung angeordnet sein. Zudem bietet es sich an, stromab der Reduktionsmittel-Zudosierstelle die abgasberührten Bauteile mit einer katalytisch aktiven Oberfläche oder Beschichtung zu versehen, um Ablagerungen von z. B. unerwünschten, festen Reduktionsmittelzersetzungsprodukten zu vermeiden.

Um sicherzustellen, dass ein Abgasteilstrom in die Teilstrom-Abgasleitung überströmt, ist es vorteilhaft, im Bereich der Reststrom-Abgasleitung eine Drosselstelle vorzusehen und den Abgasteilstrom in der bereits zuvor beschriebenen Art und Weise stromab dieser Drosselstelle wieder zurückzuführen. Auf separate Einbauten zur Androsselung kann verzichtet werden, wenn die Abzweigstelle so gewählt wird, dass in vorteilhafter Weise Bauteile ausgenützt werden, die ohnehin regelmäßig einen Strömungswiderstand im Hauptstrom zur Folge haben: so kann durch die Anordnung eines Katalysators zur Oxidation von Stickstoffmonoxid und/oder von Kohlenwasserstoffen in der Reststrom-Abgasleitung dieser Effekt vorteilhaft erreicht werden. Zum einen kann damit auf zusätzliche Drosselvorrichtungen verzichtet werden und zum anderen wird durch die Erhöhung des Anteils an Stickstoffdioxid einerseits die Voraussetzung geschaffen, eine nachgeordnete Abscheidervorrichtung zum Abscheiden von Partikeln aus dem Abgas in vorteilhafter Weise kontinuierlich zu regenerieren. Andererseits steht für die SCR-Reaktion ebenfalls ein höherer Anteil des reaktionsfreudigeren Stickstoffdioxid zur Verfügung, was den Umsatz von Stickoxiden vorteilhaft erhöht. Dieser eben beschriebene Einsatz eines Oxidations-Katalysators im Bereich der Reststrom-Abgasleitung bringt daher eine Fülle von vorsätzlichen Vorteilen mit sich.

Die Abscheidervorrichtungen für die Partikel können dabei stromab und/oder stromauf der Zuführstelle der Teilstrom-Abgasleitung zur Reststrom-Abgasleitung angeordnet sein. In diesem Zusammenhang sei auch nochmal explizit erwähnt, dass die Abgasmenge, die über die Teilstrom-Abgasleitung, bevorzugt abströmt geringer ist als die über die Reststrom-Abgasleitung strömende Abgasmenge.

Für den Oxidationskatalysator zur Oxidation von Stickstoffmonoxid lassen sich vorteilhaft Platin und/oder Palladium und/oder Rhodium und/oder Cer und/oder deren Oxide und/oder Zeolithe als aktive katalytische Materialen verwenden.

Als Aktivkomponenten für die SCR-Katalysatoren zur Reduktion von Stickoxiden mit Hilfe von Ammoniak kommen in vorteilhafter Weise Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe zum Einsatz.

Für den Hydrolysekatalysator und die Beschichtung der abgasberührten Bauteile zur Verbesserung der Freisetzung von Ammoniak können als

Aktivkomponenten Titandioxid und/oder Siliziumdioxid und/oder Aluminiumoxid und/oder Zeolithe zur Anwendung kommen.

Zur exakten Einstellung der Verweilzeit in der Thermolyse- oder Hydrolysestrecke kann es vorteilhaft sein, in der Teilstrom-Abgasleitung ein Drosselelement anzuordnen, das die Raumgeschwindigkeit des Abgases und/oder die Abgasmenge im Abzweig steuert oder regelt.

Weiter kann es vorteilhaft sein, stromab zum SCR-Katalysator einen Katalysator zum Oxidieren von Ammoniak anzuordnen, um einen Ammoniakschlupf zu vermeiden.

Weiter ist es vorteilhaft, mehrere der im Abgasnachbehandlungssystesm enthaltenen Katalysatoren in einem Gehäuse, z. B. in einem Schalldämpfergehäuse, zusammenzufassen, um die Kosten für das System und insbesondere den Platzbedarf für den Einbau in z. B. Nutzfahrzeuge zu minimieren. Partikelabscheider bzw. Partikelfilter als Abscheidervorrichtungen sollten dabei vorteilhaft so verbaut sein, dass sie auswechselbar sind.

Die Erfindung wird nachfolgend anhand einer Zeichnung näher erläutert.

Es zeigen:
- Fig. 1: schematisch eine erste Ausführungsform einer erfindungsgemäßen Vorrichtung zur Reinigung eines Abgasstroms einer Brenn- kraftmaschine,
- Fig. 2: schematisch eine zweite Ausführungsform einer erfindungsgemäßen Vorrichtung zur Reinigung eines Abgasstroms einer Brennkraft- maschine gemäß der vorliegenden Erfindungsidee,
- Fig. 3: schematisch eine beispielhafte Ausgestaltung einer thermischen Kopplung einer Teilstrom-Abgasleitung mit einer Turbinenleitung,
- Fig. 4: schematisch eine Schnittdarstellung entlang der Linie A-A der Fig. 3,
- Fig. 5: schematisch eine alternative Ausgestaltung zur Leitungsführung gemäß Fig. 4, und
- Fig.6: schematisch eine alternative Leitungsführung zu den Ausge- staltungen der Fig. 4 und 5.

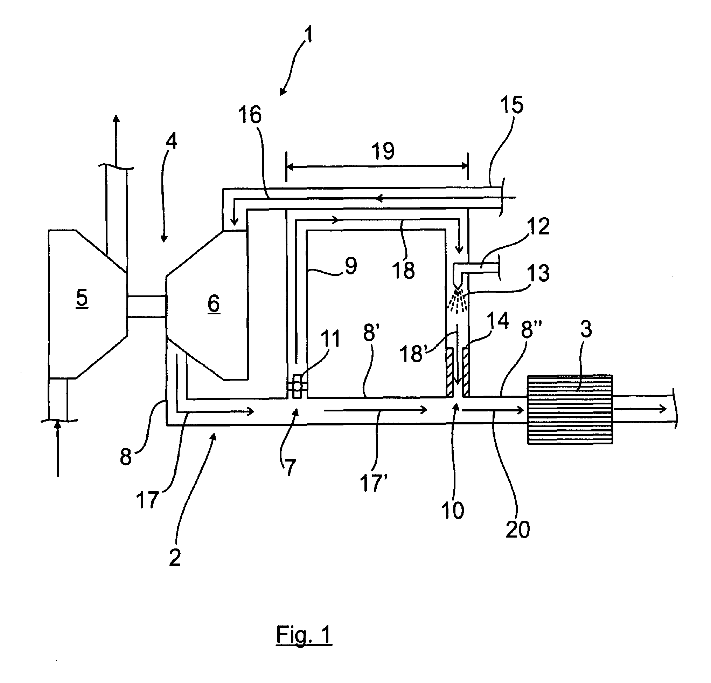

In der Fig. 1 ist schematisch eine erste Ausführungsform einer erfindungsgemäßen Vorrichtung 1 gezeigt, die einen in einem Abgasstrang 2 einer hier nicht gezeigten Brennkraftmaschine angeordneten SCR-Katalysator 3 aufweist. Die Abgasreinigungsvorrichtung 1 weist einen Abgasturbolader 4 auf, der in üblicher Weise einer Verdichter 5 und eine Abgasturbine 6 aufweist. Stromauf des SCR-Katalysators 3 ist eine Abzweigstelle 7 vorgesehen, an der sich eine vom Abgasturbolader 4 kommende Abgasleitung 8 in eine Teilstrom-Abgasleitung 9 und in eine Reststrom-Abgasleitung 8' aufzweigt, wobei die Teilstrom-Abgasleitung 9 stromab der Abzweigstelle 7 und stromauf des SCR-Katalysators 3 an einer Zuführstelle 10 wieder mit der Reststrom-Abgasleitung 8' zusammengeführt wird und als Abgasleitung 8" zum SCR-Katalysator 3 geführt ist.

In der Teilstrom-Abgasleitung 9 ist hier beispielhaft im Bereich der Abzweigstelle 7 ein mittels einer hier nicht gezeigten Steuer- und/oder Regeleinrichtung ansteuerbares Drosselelement 11 angeordnet, das in der in der Fig. 1 mit durchgezogenen Linien gezeigten Offenstellung die Teilstrom-Abgasleitung 9 freigibt und in der in der Fig. 1 lediglich strichliert dargestellten Geschlossenstellung die Teilstrom-Abgasleitung 9 verschließt.

Ferner ist im Bereich der Teilstrom-Abgasleitung 9 stromab des Drosselelementes 11 und stromauf der Zuführstelle 10 eine Reduktionsmittelzudosiervorrichtung ausbildende Düse 12 vorgesehen, die in die Teilstrom-Abgasleitung 9 einragt und über die ein Reduktionsmittel 13 in die Teilstrom-Abgasleitung 9 zu vorgegebenen Zeiten in vorgegebener Menge eingedüst wird.

Unmittelbar nach der Zuführstelle 10 ist die Teilstrom-Abgasleitung 9 hier mit einer katalytisch aktiven Beschichtung 14 versehen, mittels der sich in der Teilstrom-Abgasleitung 9 ggf. bildende Reduktionsmittelzersetzungsprodukte zersetzt werden können, um zu vermeiden, dass diese den SCR-Katalysator 3 verstopfen können.

Die Teilstrom-Abgasleitung 9 liegt hier beispielhaft in einem mittleren Bereich entlang einer vorgegebenen Wegstrecke mit ihrer Wand in einer unmittelbaren Anlageverbindung an einem Teilbereich einer zur Abgasturbine 6 geführten Turbinenleitung 15 an.

Die Funktionsweise dieser Ausführungsform der Abgasreinigungsvorrichtung 1 wird nachfolgend näher erläutert:

Ein von der Brennkraftmaschine kommender heißer Abgasstrom 16 durchströmt die Abgasturbine 6, wodurch in üblicher Weise der Verdichter 5 angetrieben wird. Der dann bereits abgekühlte Abgasstrom 17 strömt dann in der Abgasleitung 8 in Richtung zur Abzweigstelle 7, wo von dem Abgasstrom 17 ein Teilabgasstrom 18 über die Teilstrom-Abgasleitung 9 abgezweigt wird, wobei die Abgasmenge des abgezweigten Teilabgasstroms 18 kleiner ist als der über die Reststrom-Abgasleitung 8' zur Zuführstelle 10 strömende Restabgasstrom 17'.

Der Teilabgasstrom 18 wird entlang des durch die Anlageverbindung der Teilstrom-Abgasleitung 9 an der Turbinenleitung 15 definierten Wärmetauscherbereich 19 aufgeheizt und strömt dann als heißer Teilabgasstrom zur Düse 12, wo das Reduktionsmittel 13 in der zuvor beschriebenen Weise zugedüst wird, so dass im Bereich der katalytisch aktiven Beschichtung ein mit Reduktionsmittel beladener heißer Teilabgasstrom 18' vorliegt.

Im Bereich der katalytisch aktiven Beschichtung 14 kann das Reduktionsmittel auf Grund der hohen Temperaturen problemlos zersetzt und Ammoniak freigesetzt werden.

Der heiße, mit Reduktionsmittel, insbesondere Ammoniak, beladene Teilabgasstrom 18' wird dann an der Zuführstelle 10 wieder dem kälteren Restabgasstrom 17' beigemischt und strömt dann als heißer, mit Reduktionsmittel beladener Abgasstrom in den SCR-Katalysator 3, wo in üblicher Weise die selektive katalytische Reduktion stattfindet.

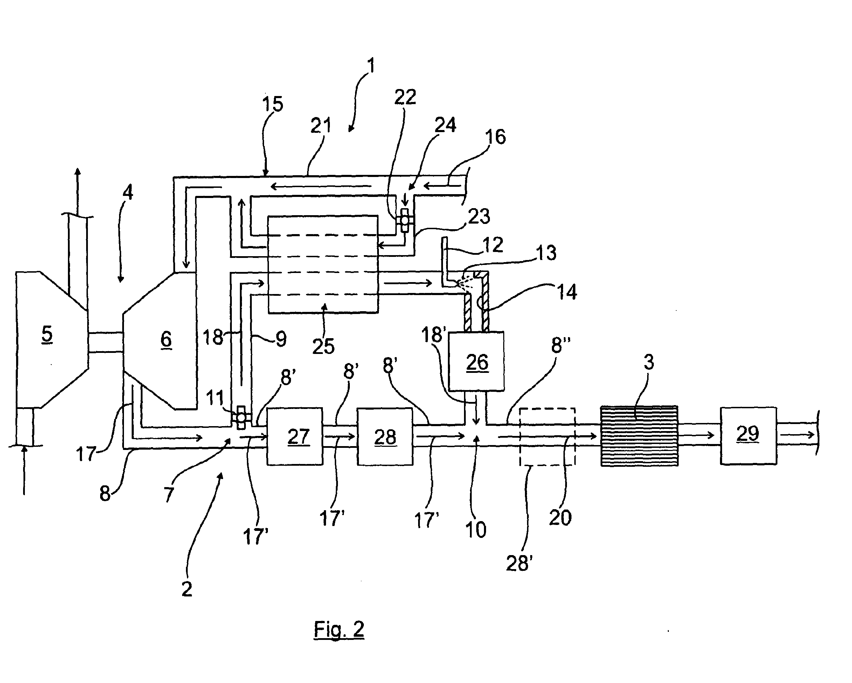

In der Fig. 2 ist eine alternative Ausführungsform der erfindungsgemäßen Abgasreinigungsvorrichtung 1 gezeigt, die hinsichtlich der Effektivität der Abgasreinigung noch weiter verbessert ist. Gleiche Bauteile zur Ausführungsform der Fig. 1 werden hier mit gleichen Bezugszeichen bezeichnet.

Im Unterschied zur Ausgestaltung nach Fig. 1 ist hier die Turbinenleitung 15 im Bereich vor der Abgasturbine 6 zweiflutig ausgebildet und weist eine erste Zweigleitung 21 auf, von der eine mittels eines Drosselelementes 22 absperrbare zweite Zweigleitung 23 abzweigt, der die stromab der Abzweigstelle 24 und stromauf der Abgasturbine 6 wieder in die erste Zweigleitung 21 einmündet bzw. mit dieser zusammengeführt wird. Diese zweite Zweigleitung 23 ist über eine hier lediglich äußerst schematisch dargestellte Wärmetauscheranordnung 25 thermisch mit der Teilstrom-Abgasleitung 9 gekoppelt, um den darin geführten Teilabgasstrom 18 in der zuvor in der Verbindung mit der Fig. 1 beschriebenen Art und Weise aufzuheizen. Das Drosselelement 22 ist hier wiederum in einer nicht gezeigten Art und Weise mit einer Steuer- und Regeleinrichtung verbunden, mittels der entsprechend vorgegebene Betriebsparameter die zweite Zweigleitung 23 entsprechend freigegeben und verschlossen werden kann, so dass mittels dieser zweiflutigen Ausbildung der Turbinenleitung 15 die Temperaturen in der durch die Wärmetauscheranordnung 25 gebildeten Thermolyse- bzw. Hydrolysestrecke optimal eingestellt werden können.

Im weiteren Unterschied zur Ausgestaltung nach Fig. 1 ist hier zudem im Bereich der Teilstrom-Abgasleitung 9 stromab der Düse 12 und stromauf der Zuführstelle 10 ein Hydrolysekatalysator 26 angeordnet, der die Abspaltung von Ammoniak aus dem bevorzugt durch Harnstof ((NH₂)₂CO) gebildeten Reduktionsmittel und die Hydroylse von Isocyansäure begünstigt.

Um sicherzustellen, dass das Abgas in die Teilstrom-Abgasleitung 9 zuverlässig und funktionssicher überströmt, ist es notwendig, in der Reststrom-Abgasleitung 8' eine Drosselstelle vorzusehen. Diese Drossel wird hier bevorzugt durch einen Oxidationskatalysator 27 gebildet, mittels dem bevorzugt Stickstoffmonoxid und/oder Kohlenwasserstoffe oxidiert werden können. Neben dem Vorteil, dass dadurch auf zusätzliche Drosselvorrichtungen verzichtet werden kann, wird durch das Vorsehen eines Oxidationskatalysators 27 in der Reststrom-Abgasleitung 8' zudem der Anteil des Stickstoffdioxids im Restabgasstrom 17' erhöht und damit die Voraussetzung dafür geschaffen, dass ein dem Oxidationskatalysator 27 nachgeschalteter Partikelfilter 28 in vorteilhafter Weise kontinuierlich regeneriert werden kann. Desweiteren steht für die SCR-Reaktion im SCR-Katalysator ebenfalls ein höherer Anteil des reaktionsfreudigeren Stickstoffdioxids zur Verfügung, was den Umsatz an Stickoxiden vorteilhaft erhöht.

Der Partikelfilter 28 ist hier stromauf der Zuführstelle 10 angeordnet. Wie dies in der Fig. 2 strichliert angedeutet ist, kann der Partikelfilter 28' zusätzlich oder alternativ auch stromab der Zuführstelle 10 sowie stromauf des SCR-Katalysators 3 in der Abgasleitung 8" angeordnet sein.

Desweiteren ist in der Ausführungsform gemäß Fig. 2 stromab des SCR-Katalysators 3 ein NH₃-Oxidationskatalysator 29 vorgesehen, mittels dem Ammoniak oxidiert werden kann, um so einen Ammoniakschlupf zu verweiden.

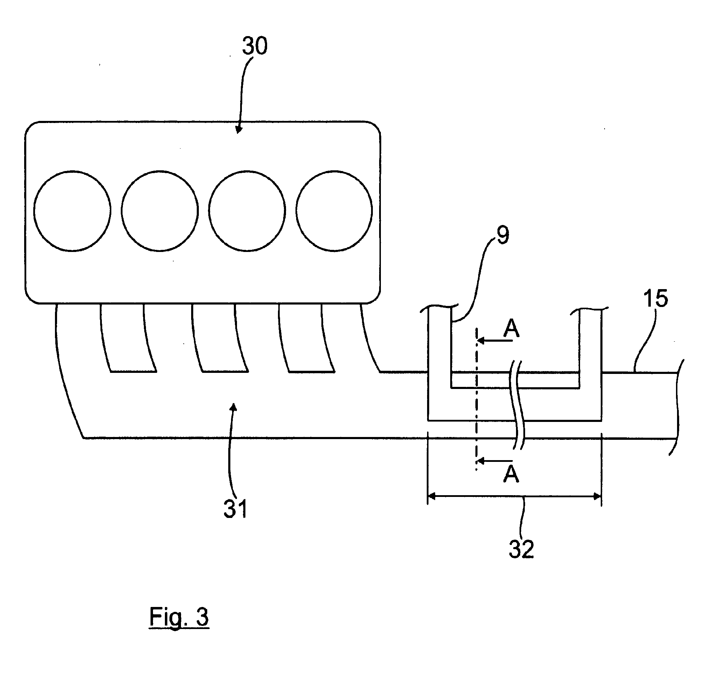

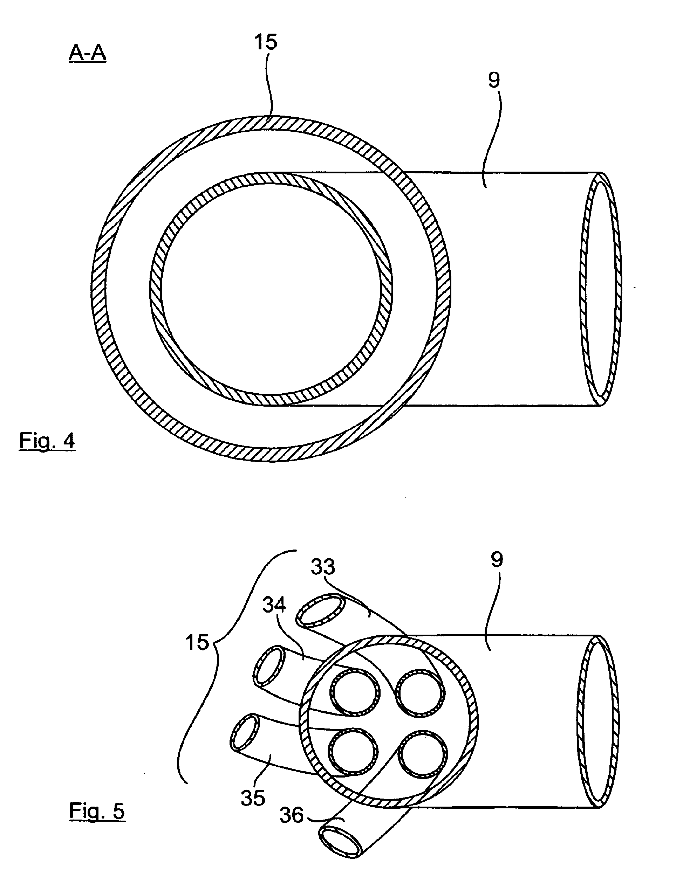

In der Fig. 3 ist lediglich beispielhaft und schematisch eine weitere alternative Ausgestaltung einer Wärmetauscheranordnung gezeigt, und zwar in Verbindung mit der in der Fig. 4 gezeigten schematischen Schnittdarstellung entlang der Linie A-A der Fig. 3. Wie dies dieser äußerst schematischen Darstellung zu entnehmen ist, führt hier von einer Brennkraftmaschine 30 ein Abgassammler 31 als Bestandteil des Abgasstrangs 2 weg, wobei unmittelbar im Bereich des Abgassammlers 31 die Teilstrom-Abgasleitung 9 in die sich an den Abgassammler 31 anschließende Turbinenleitung 15 einmündet. Die Teilstrom-Abgasleitung 9 ist entlang einer vorgegebenen Wegstrecke 32 innerhalb der Turbinenleitung 15 geführt und wird dabei, wie in der Fig. 4 gut ersichtlich, vom heißen Abgasstrom umströmt, so dass der in der Teilstrom-Abgasleitung 9 strömende Teilabgasstrom entlang der Wegstrecke 32 aufgeheizt wird, bevor die Teilstrom-Abgasleitung 9 wieder aus der Turbinenleitung 15 herausgeführt wird.

In der Fig. 5 ist lediglich beispielhaft und schematisch eine alternative Ausgestaltung zur Leitungsführung nach Fig. 4 gezeigt. Hier sind beispielhaft vier mit einem heißen Abgas durchströmte Zweigleitungen 33 bis 36, die Bestandteil der Turbinenleitung 15 bilden in das Innere der Teilstrom-Abgasleitung 9 geführt, und zwar ebenfalls wiederrum entlang einer vorgegebenen Wegstrecke, so dass diese heißen Zweigleitungen 33 bis 36 vom dem demgegenüber kalten Teilabgasstrom umströmt werden, wodurch sich der Teilabgasstrom in der zuvor beschriebenen Weise aufheizt und zugleich Wärmeverluste an die Umgebung minimiert werden.

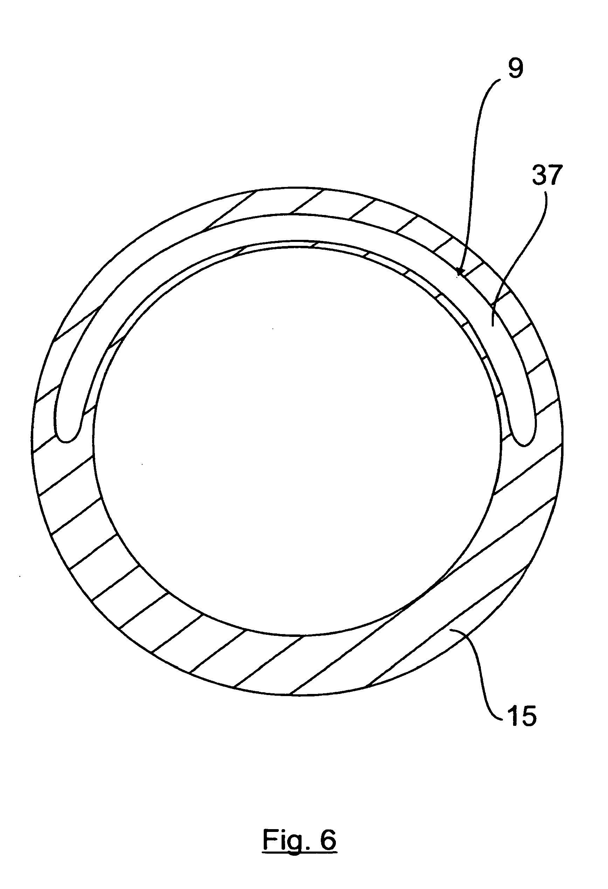

In der Fig. 6 ist schließlich eine letzte alternative Ausführungsform gezeigt, bei der die Turbinenleitung entlang einer vorgegebenen Erstreckungslänge und in einem vorgegebenen Bereich, insbesondere im Bereich eines Abgassammlers, doppelwandig mit einem einen Wärmetauscherbereich der Teilstrom-Abgasleitung 9 ausbildenden Wandholraum 37 ausgebildet ist.

Die Ausgestaltungen der Fig. 3 bis 6 sind lediglich äußerst schematisch und in keinster Weise bezüglich der Ausgestaltungsmöglichkeiten begrenzend. Mit diesen hier gezeigten Ausführungsformen soll lediglich das Grundprinzip der thermischen Kopplung mit unterschiedlichen Maßnahmen dargestellt und erläutert werden.

## Patentansprüche

1. Vorrichtung zur Reinigung eines Abgasstroms einer Brennkraftmaschine, insbesondere einer magerlauffähigen Brennkraftmaschine, mit wenigstens einem in einem Abgasstrang (2) einer Brennkraftmaschine angeordneten SCR-Katalysator (3), wobei sich eine Abgasleitung (8) stromauf des SCR-Katalysators (3) an einer Abzweigstelle (7) in eine Teilstrom-Abgasleitung (9) und in eine Reststrom-Abgasleitung (8') aufzweigt, wobei die Teilstrom-Abgasleitung (9) mit einer Reduktionsmittel-Zudosiervorrichtung (12) zur Zudosierung eines Reduktionsmittels (13) in den in der Teilstrom-Abgasleitung (9) geführten Abgasteilstrom (18) gekoppelt ist, und wobei die Teilstrom-Abgasleitung (9) und die Reststrom-Abgasleitung (8') stromab der Abzweigstelle (7) und stromauf des wenigstens einen SCR-Katalysators (3) an einer Abgasleitung (8") zusammengeführt sind, **dadurch gekennzeichnet, dass** die Teilstrom-Abgasleitung (9) thermisch mit wenigstens einer, einen heißen Abgasstrom (16) zu einer Abgasturbine (16) eines Abgasturboladers (4) führenden Turbinenleitung (15) gekoppelt ist.

2. Vorrichtung nach Anspruch 1, **dadurch gekennzeichnet, dass** die Teilstrom-Abgasleitung (9) und die wenigstens eine Turbinenleitung (15) zur thermischen Kopplung entlang einer vorgegebenen Erstreckungslänge (19, 32) eine Wärmetauscheranordnung (25) ausbilden oder Bestandteil einer Wärmetauscheranordnung sind.

3. Vorrichtung nach Anspruch 2, **dadurch gekennzeichnet, dass** die Teilstrom-Abgasleitung (9) und die wenigstens eine Turbinenleitung (15) entlang einer vorgegebenen Erstreckungslänge (19) in einer Anlageverbindung aneinander anliegen.

4. Vorrichtung nach Anspruch 3, **dadurch gekennzeichnet, dass** die Teilstrom-Abgasleitung (9) und/oder die wenigstens eine Turbinenleitung (15) im Anlagebereich gegenüber der Außenumgebung thermisch isoliert sind.

5. Vorrichtung nach Anspruch 2, **dadurch gekennzeichnet, dass** die wenigstens eine Turbinenleitung (15) entlang einer vorgegebenen Erstreckungslänge, insbesondere im Bereich eines Abgassammlers, doppelwandig mit einem, einen Wärmetauscherbereich der Teilstrom-Abgasleitung (9) ausbildenden Wandhohlraum (37) ausgebildet ist, insbesondere dort eingegossen ist.

6. Vorrichtung nach Anspruch 2, **dadurch gekennzeichnet, dass** die Teilstrom-Abgasleitung (9) entlang einer vorgegebenen Erstreckungslänge (32) in eine Turbinenleitung (15) einmündet und innerhalb dieser verläuft sowie vom heißen Abgasstrom umströmt ist.

7. Vorrichtung nach Anspruch 2, **dadurch gekennzeichnet, dass** wenigstens eine Turbinenleitung (15) entlang einer vorgegebenen Erstreckungslänge in die Teilstrom-Abgasleitung (9) mündet und innerhalb dieser verläuft sowie den kalten Abgasteilstrom durchströmt.

8. Vorrichtung nach einem der Ansprüche 1 bis 7, **dadurch gekennzeichnet, dass** die Turbinenleitung (15) stromauf der Abgasturbine (6) mehrflutig ausgebildet ist und wenigstens eine der Zweigleitungen (23) die mit der Teilstrom-Abgasleitung (9) thermisch gekoppelte Turbinenleitung ausbildet.

9. Vorrichtung nach Anspruch 8, **dadurch gekennzeichnet, dass** eine die thermisch gekoppelte Turbinenleitung ausbildende Zweigleitung (23) vorgesehen ist, und dass in der Zweigleitung (23) wenigstens ein mittels einer Steuer- und/oder Regeleinrichtung ansteuerbares Zweigleitung-Absperrelement (22), insbesondere eine Drossel und/oder ein Ventil und/oder eine Verschlussklappe, angeordnet ist, mittels dem die Zweigleitung (23) zu vorgegebenen Zeiten wenigstens zum Teil freigebbar oder verschließbar ist.

10. Vorrichtung nach Anspruch 8 oder Anspruch 9, **dadurch gekennzeichnet, dass** die Zweigleitungen (21, 23) stromauf der Abgasturbine (6) wieder zu einer einzigen Turbinenleitung (15) zusammengeführt sind.

11. Vorrichtung nach Anspruch 8 oder Anspruch 9, **dadurch gekennzeichnet, dass** die Abgasturbine (6) von den Zweigleitungen mehrflutig gespeist ist, dass die Zweigleitungen unterschiedlichen Zylindern oder unterschiedlichen Zylindergruppen der Brennkraftmaschine zugeordnet sind, und dass der oder die Zylinder derjenigen Zweigleitung, die mit der Teilstrom-Abgasleitung (9) thermisch gekoppelt ist, wenigstens zeitweise mit, gegenüber den anderen Zylindern derjenigen Zweigleitung(en), die nicht mit der Teilstrom-Abgasleitung (9) thermisch gekoppelt ist bzw. sind, anderen Betriebsparametern betrieben ist.

12. Vorrichtung nach einem der Ansprüche 1 bis 11, **dadurch gekennzeichnet, dass** wenigstens zwei Abgasturbolader vorgesehen sind, deren Abgasturbinen mittels jeweils unterschiedlichen Zylindergruppen oder Zylinderbänken der Brennkraftmaschine zugeordneten Turbinenleitungen mit einem heißen Abgasstrom beaufschlagt sind, dass die Teilstrom-Abgasleitung mit einer oder lediglich einem Teil der Turbinenleitungen thermisch gekoppelt ist, und dass die den mit der Teilstrom-Abgasleitung thermisch gekoppelten Turbinenleitungen zugeordneten Zylindergruppen oder Zylinderbänke wenigstens zeitweise mit anderen Betriebsparametern betreibbar sind als die nicht mit der Teilstrom-Abgasleitung thermisch gekoppelten Turbinenleitungen.

13. Vorrichtung nach einem der Ansprüche 1 bis 12, **dadurch gekennzeichnet, dass** in der Teilstrom-Abgasleitung (9) wenigstens ein mittels einer Steuer- und/oder Regeleinrichtung ansteuerbares Teilstrom-Absperrelement (11), insbesondere eine Drossel und/oder ein Ventil und/oder eine Verschlussklappe, angeordnet ist, mittels den die Teilstrom-Abgasleitung (9) zu vorgegebenen Zeiten wenigstens zum Teil freigebbar oder verschließbar ist.

14. Vorrichtung nach einem der Ansprüche 1 bis 13, **dadurch gekennzeichnet, dass** stromab der Reduktionsmittel-Zudosierstelle und stromauf der Zuführstelle (10) wenigstens ein Hydrolyse-Katalysator (26) zur Hydrolyse des Reduktionsmittels (13) in der Teilstrom-Abgasleitung (9) angeordnet ist.

15. Vorrichtung nach einem der Ansprüche 1 bis 14, **dadurch gekennzeichnet, dass** die abgasberührenden Teile der Teilstrom-Abgasleitung (9), insbesondere stromab der Reduktionsmittel-Zudosierstelle, mit einer katalytisch aktiven Oberfläche oder Beschichtung (14) ausgebildet sind, die die Ablagerung von definierten Stoffen, insbesondere von Reduktionsmittelzersetzungsprodukten, verhindern und/oder die Zersetzung des Reduktionsmittels und/oder von Reduktionsmittelzersetzungsprodukten begünstigen.

16. Vorrichtung nach einem der Ansprüche 1 bis 15, **dadurch gekennzeichnet, dass** ein Oxidationskatalysator (27) stromab der Abzweigstelle (7) und stromauf der Zuführstelle (10) in die Reststrom-Abgasleitung (8') integriert ist.

17. Vorrichtung nach einem der vorhergehenden Ansprüche, **dadurch gekennzeichnet, dass** stromab und/oder stromauf der Reduktionsmittel-Zudosierstelle in der Teilstrom-Abgasleitung (9) und/oder in der Reststrom-Abgasleitung (8') und/oder stromab der Zuführstelle (10) wenigstens eine Abscheidervorrichtung (28, 28') zum Abscheiden von Partikeln aus dem Abgas angeordnet ist.

18. Vorrichtung nach Anspruch 17, **dadurch gekennzeichnet, dass** die Abscheidervorrichtung (28, 28') stromauf oder stromab des SCR-Katalysators (3) angeordnet ist.

19. Verfahren zur Reinigung eines Abgasstroms einer Brennkraftmaschine, insbesondere einer magerlauffähigen Brennkraftmaschine, insbesondere mittels einer Vorrichtung nach einem der vorhergehenden Ansprüche, mit wenigstens einem in einem Abgasstrang (2) einer Brennkraftmaschine angeordneten SCR-Katalysator (3), wobei an einer Abzweigstelle (7) stromauf des wenigstens einen SCR-Katalysators (3) von einem Abgasstrom (17) ein Abgasteilstrom (18) so abgezweigt wird, dass ein Restabgasstrom (17') und der Abgasteilstrom (18) vorliegt, wobei in den Abgasteilstrom (18) ein Reduktionsmittel (13) zudosiert wird, und wobei an einer Zuführstelle (10) stromab der Abzweigstelle (7) und stromauf des wenigstens einen SCR-Katalysators (3) der mit Reduktionsmittel (13) beladene Abgasteilstrom (18') mit dem Restabgasstrom (17') vermischt wird, so dass dem wenigstens einen SCR-Katalysator (3) ein heißer, mit Reduktionsmittel (13) beladener Reduktionsmittel-Abgasstrom (20) zugeführt wird, **dadurch gekennzeichnet, dass** der Abgasteilstrom (18) thermisch mit einem zu einer Abgasturbine (6) eines Abgasturboladers (4) geführten heißen Abgasstrom (16) gekoppelt ist.

## Claims

1. A device for cleaning an exhaust stream of an internal combustion engine, in particular of a lean-burn internal combustion engine, with at least one SCR catalyst (3) arranged in an exhaust-system branch (2) of an internal combustion engine, with an exhaust line (8) branching into a partial-stream exhaust line (9) and a residual-stream exhaust line (8') at a branching-off point (7) upstream from the SCR catalyst (3), the partial-stream exhaust line (9) being coupled with a reducing-agent admetering device (12) for admetering a reducing agent (13) into the partial exhaust stream (18) carried in the partial-stream exhaust line (9), and the partial-stream exhaust line (9) and the residual-stream exhaust line (8') being brought together downstream from the branching-off point (7) and upstream from the at least one SCR catalyst (3) at an exhaust line (8"), **characterised in that** the partial-stream exhaust line (9) is thermally coupled with at least one turbine line (15) carrying a hot exhaust stream (16) to an exhaust-gas turbine (16) [sic] of an exhaust turbocharger (4).

2. A device according to Claim 1, **characterised in that** the partial-stream exhaust line (9) and the at least one turbine line (15) for thermal coupling along a predetermined length (19, 32) form a heat-exchanger arrangement (25) or form part of a heat-exchanger arrangement.

3. A device according to Claim 2, **characterised in that** the partial-stream exhaust line (9) and the at least one turbine line (15) along a predetermined length (19) lie against one another in a contact connection.

4. A device according to Claim 3, **characterised in that** the partial-stream exhaust line (9) and/or the at least one turbine line (15) in the region of contact are thermally insulated from their external surroundings.

5. A device according to Claim 2, **characterised in that** the at least one turbine line (15) along a predetermined length, in particular in the region of an exhaust collector, is of dual-walled construction with a wall cavity (37) which forms a heat-exchanger region of the partial-stream exhaust line (9), in particular is cast-in there.

6. A device according to Claim 2, **characterised in that** the partial-stream exhaust line (9) along a predetermined length (32) opens into a turbine line (15) and runs within the latter and also is flowed around by the hot exhaust stream.

7. A device according to Claim 2, **characterised in that** at least one turbine line (15) along a predetermined length opens into the partial-stream exhaust line (9) and runs within the latter and also flows through the cold partial exhaust stream.

8. A device according to one of Claims 1 to 7, **characterised in that** the turbine line (15) upstream from the exhaust-gas turbine (6) is of multi-scroll construction and at least one of the branch lines (23) forms the turbine line thermally coupled to the partial-stream exhaust line (9).

9. A device according to Claim 8, **characterised in that** a branch line (23) forming the thermally coupled turbine line is provided, and **in that** at least one branch-line shut-off element (22) which can be controlled by means of a control and/or regulating means, in particular a choke and/or a valve and/or a closing flap, is arranged in the branch line (23), by means of which element the branch line (23) can be released or closed at least in part at predetermined times.

10. A device according to Claim 8 or Claim 9, **characterised in that** the branch lines (21, 23) are brought together again upstream from the exhaust-gas turbine (6) to form a single turbine line (15).

11. A device according to Claim 8 or Claim 9, **characterised in that** the exhaust-gas turbine (6) is fed in a multi-scroll configuration by the branch lines, **in that** the branch lines are associated with different cylinders or different cylinder groups of the internal combustion engine, and **in that** the cylinder(s) of that branch line which is thermally coupled with the partial-stream exhaust line (9) is (are) operated at least temporarily with operating parameters which are different from those of the other cylinders of that (those) branch line(s) which is or are not thermally coupled with the partial-stream exhaust line (9).

12. A device according to one of Claims 1 to 11, **characterised in that** at least two exhaust turbochargers are provided, the exhaust-gas turbines of which are supplied with a hot exhaust stream by means of turbine lines associated with cylinder groups or cylinder banks of the internal combustion engine which differ in each case, **in that** the partial-stream exhaust line is thermally coupled with one or merely part of the turbine lines, and **in that** the cylinder groups or cylinder banks associated with the turbine lines thermally coupled with the partial-stream exhaust line can be operated at least temporarily with different operating parameters from the turbine lines which are not thermally coupled with the partial-stream exhaust line.

13. A device according to one of Claims 1 to 12, **characterised in that** at least one partial-stream shut-off element (11) which can be controlled by means of a control and/or regulating means, in particular a choke and/or a valve and/or a closing flap, is arranged in the partial-stream exhaust line (9), by means of which element the partial-stream exhaust line (9) can be released or closed at least in part at predetermined times.

14. A device according to one of Claims 1 to 13, **characterised in that** at least one hydrolysis catalyst (26) for hydrolysis of the reducing agent (13) is arranged in the partial-stream exhaust line (9) downstream from the reducing-agent admetering point and upstream from the point of supply (10).

15. A device according to one of Claims 1 to 14, **characterised in that** the parts of the partial-stream exhaust line (9) which are in contact with the exhaust, in particular downstream from the reducing-agent admetering point, are formed with a catalytically active surface or coating (14) which prevent [sic] the deposition of defined substances, in particular of reducing-agent decomposition products, and/or promote [sic] the decomposition of the reducing agent and/or of reducing-agent decomposition products.

16. A device according to one of Claims 1 to 15, **characterised in that** an oxidation catalyst (27) is integrated into the residual-stream exhaust line (8') downstream from the branching-off point (7) and upstream from the point of supply (10).

17. A device according to one of the preceding claims, **characterised in that** at least one separating device (28, 28') for separating off particles from the exhaust is arranged downstream and/or upstream from the reducing-agent admetering point in the partial-stream exhaust line (9) and/or in the residual-stream exhaust line (8') and/or downstream from the point of supply (10).

18. A device according to Claim 17, **characterised in that** the separation device (28, 28') is arranged upstream or downstream from the SCR catalyst (3).

19. A method for cleaning an exhaust stream of an internal combustion engine, in particular of a lean-burn internal combustion engine, in particular by means of a device according to one of the preceding claims, with at least one SCR catalyst (3) arranged in an exhaust-system branch (2) of an internal combustion engine, with a partial exhaust stream (18) being branched off from an exhaust stream (17) at a branching-off point (7) upstream from the at least one SCR catalyst (3) such that a residual-exhaust stream (17') and the partial exhaust stream (18) exist, with a reducing agent (13) being metered into the partial exhaust stream (18), and with the partial exhaust stream (18') laden with reducing agent (13) being mixed with the residual exhaust stream (17') at a point of supply (10) downstream from the branching-off point (7) and upstream from the at least one SCR catalyst (3), so that a hot reducing agent-exhaust stream (20) laden with reducing agent (13) is supplied to the at least one SCR catalyst (3), **characterised in that** the partial exhaust stream (18) is thermally coupled to a hot exhaust stream (16) carried to an exhaust-gas turbine (6) of an exhaust turbocharger (4).

## Revendications

1. Dispositif pour nettoyer un flux de gaz d'échappement d'un moteur à combustion interne, notamment d'un moteur à combustion interne fonctionnant en mode maigre, comprenant au moins un catalyseur SCR (3) installé dans la conduite des gaz d'échappement (2) du moteur à combustion interne,
- la conduite des gaz d'échappement (8) se divisant en amont du catalyseur SCR (3) à un point de dérivation (7) en une conduite de fraction de veine (9) de gaz d'échappement et en une conduite de veine résiduelle de gaz d'échappement (8'),
- la conduite de fraction de veine de gaz d'échappement (9) étant couplée à un dispositif de dosage d'agent réducteur (12) pour doser un agent réducteur (13) dans la fraction de veine de gaz d'échappement (18) traversant la conduite (9), et
- la conduite de fraction de veine de gaz d'échappement (9) et la conduite de la veine résiduelle de gaz d'échappement (8') se rejoignant en aval du point de dérivation (7) et en amont d'au moins un catalyseur SCR (3) dans une conduite de gaz d'échappement (8"),
dispositif **caractérisé en ce que**
la conduite de fraction de veine de gaz d'échappement (9) est couplée thermiquement à au moins une conduite de turbine (15) conduisant une veine de gaz d'échappement chauds (16) vers la turbine (16) d'un turbocompresseur de gaz d'échappement (4).

2. Dispositif selon la revendication 1,
**caractérisé en ce que**
la conduite de fraction de veine de gaz d'échappement (9) et au moins une conduite de turbine (15), assurent le couplage thermique le long d'une longueur prédéfinie (19, 32) en formant un dispositif échangeur de chaleur (25) ou une partie d'un dispositif échangeur de chaleur.

3. Dispositif selon la revendication 2,
**caractérisé en ce que**
la conduite de fraction de veine de gaz d'échappement (9) et au moins une conduite de turbine (15) sont appliquées l'une contre l'autre suivant une longueur (19) prédéterminée par une liaison d'installation.

4. Dispositif selon la revendication 3,
**caractérisé en ce que**
la conduite de fraction de veine de gaz d'échappement (9) et/ou au moins une conduite de turbine (15), sont isolées thermiquement vis-à-vis de l'environnement dans leur zone de jonction.

5. Dispositif selon la revendication 2,
**caractérisé en ce qu'**
au moins une conduite de turbine (15) est réalisée sur une longueur prédéfinie, notamment dans la zone d'un accumulateur de gaz d'échappement, avec une double paroi comportant une cavité (37) formant une zone d'échange de chaleur pour la conduite de fraction de veine de gaz d'échappement (9), en étant notamment réalisée dans celle-ci lors de sa coulée.

6. Dispositif selon la revendication 2,
**caractérisé en ce que**
la conduite de fraction de veine de gaz d'échappement (9) débouche sur une longueur prédéfinie (32) dans une conduite de turbine (15) et passe dans celle-ci en étant balayée par la veine des gaz d'échappement chauds.

7. Dispositif selon la revendication 2,
**caractérisé en ce qu'**
au moins une conduite de turbine (15) débouche sur une longueur d'extension prédéfinie dans la conduite de fraction de veine de gaz d'échappement (9) et passe dans celle-ci en traversant la fraction de veine froide des gaz d'échappement.

8. Dispositif selon l'une des revendications 1 à 7,
**caractérisé en ce qu'**
en amont de la turbine à gaz (6), la conduite de turbine (15) est à plusieurs flux et forme au moins l'une des conduites de dérivation (23) couplée thermiquement à la conduite de fraction de veine de gaz d'échappement (9).

9. Dispositif selon la revendication 8,
**caractérisé par**
- une conduite de dérivation (23) formant la conduite de turbine, couplée de manière thermique, et
- la conduite de dérivation (23) comporte au moins un élément d'arrêt (22) de conduite de dérivation, commandé à l'aide d'une installation de commande et/ou de régulation, notamment un organe d'étranglement et/ou une soupape et/ou un clapet d'obturation qui peut libérer ou fermer au moins en partie à des instants prédéfinis la conduite de dérivation (23).

10. Dispositif selon la revendication 8 ou 9,
**caractérisé en ce qu'**
en amont de la turbine de gaz d'échappement (6), les conduites de dérivation (21, 23) sont réunies en une unique conduite de turbine (15).

11. Dispositif selon la revendication 8 ou 9,
**caractérisé en ce que**
- la turbine des gaz d'échappement (6) est alimentée en plusieurs flux par les conduites de dérivation,
- les conduites de dérivation sont associées à des cylindres différents ou à des groupes de cylindres différents du moteur à combustion interne, et
- le ou les cylindres de la conduite de dérivation respective couplée thermiquement à la conduite de fraction de veine de gaz d'échappement (9), fonctionnent au moins de temps en temps avec d'autres paramètres de fonctionnement que les autres cylindres des conduites de dérivation qui ne sont pas couplées thermiquement à la conduite de fraction de veine de gaz d'échappement (9).

12. Dispositif selon l'une des revendications 1 à 11,
**caractérisé par**
- au moins deux turbocompresseurs de gaz d'échappement dont les turbines sont alimentées en gaz d'échappement chauds par des conduites de turbine associées à des groupes de cylindres différents ou des bancs de cylindres différents du moteur à combustion interne,
- la conduite de fraction de veine de gaz d'échappement est couplée thermiquement avec une ou seulement une partie des conduites de turbine, et
- les groupes de cylindres ou les bancs de cylindres associés aux conduites de turbine couplées thermiquement à la conduite de fraction de veine de gaz d'échappement, fonctionnent au moins de temps en temps avec d'autres paramètres de fonctionnement que ceux des cylindres des conduites de turbine non couplées thermiquement à la fraction de veine de gaz d'échappement.

13. Dispositif selon l'une des revendications 1 à 12,
**caractérisé en ce que**
la conduite de fraction de veine de gaz d'échappement (9) comporte au moins un élément de coupure de la fraction de veine (11) commandé par une installation de commande et/ou de régulation, notamment un organe d'étranglement et/ou une soupape et/ou un clapet de fermeture, élément qui peut libérer ou fermer au moins partiellement à des instants prédéfinis la conduite de fraction de veine de gaz d'échappement (9).

14. Dispositif selon l'une des revendications 1 à 13,
**caractérisé en ce qu'**
en aval du point de dosage d'agent réducteur et en amont du point d'alimentation (10), il est prévu au moins un catalyseur d'hydrolyse (26) pour hydrolyser l'agent réducteur (13) dans la conduite de fraction de veine de gaz d'échappement (9).

15. Dispositif selon l'une des revendications 1 à 14,
**caractérisé en ce que**
les parties traversées par les gaz d'échappement de la conduite de fraction de veine de gaz d'échappement (9), notamment en aval du point de dosage d'agent réducteur, comportent une surface ou un revêtement (14) à activité catalytique, évitant le dépôt de matières définies notamment de produits de décomposition de l'agent réducteur et/ou favorisant la décomposition de l'agent réducteur et/ou celles des produits de décomposition de l'agent réducteur.

16. Dispositif selon l'une des revendications 1 à 15,
**caractérisé en ce qu'**
un catalyseur d'oxydation (27) est intégré dans la conduite de la veine résiduelle des gaz d'échappement (8') en aval du point de dérivation (7) et en amont du point de jonction (10).

17. Dispositif selon l'une des revendications précédentes,
**caractérisé par**
au moins un dispositif de séparation (28, 28') pour séparer les particules des gaz d'échappement en aval et/ou en amont du point de dosage d'agent réducteur dans la conduite de fraction de veine de gaz d'échappement (9) et/ou dans la conduite de la veine résiduelle des gaz d'échappement (8') et/ou en aval du point de jonction (10).

18. Dispositif selon la revendication 17,
**caractérisé en ce que**
le dispositif de séparation (28, 28') est prévu en amont ou en aval du catalyseur SCR (3).

19. Procédé de nettoyage d'une veine de gaz d'échappement d'un moteur à combustion interne, notamment d'un moteur à combustion interne fonctionnant en mode maigre, en particulier à l'aide d'un dispositif selon l'une des revendications précédentes, comportant au moins un catalyseur SCR (3) installé dans la conduite des gaz d'échappement (2) du moteur à combustion interne,
- en un point de dérivation (7) en amont d'au moins un catalyseur SCR (3) on dérive une fraction de veine de gaz d'échappement (18) de la veine des gaz d'échappement (17),
- on a une veine résiduelle de gaz d'échappement (17') et la fraction de veine de gaz d'échappement (18), et
- on dose un agent réducteur (13) dans la fraction de veine de gaz d'échappement (18), et
- au point de jonction (10) en aval du point de dérivation (7) et en amont d'au moins un catalyseur SCR (3), on mélange la fraction de veine de gaz d'échappement (18') chargée de l'agent réducteur (13) avec la veine résiduelle de gaz d'échappement (17') pour qu'au moins un catalyseur SCR (3) reçoive une veine de gaz d'échappement (20) chauds, chargée d'agent réducteur (13),
procédé **caractérisé en ce qu'**
on couple thermiquement la fraction de veine de gaz d'échappement (18) à la veine des gaz d'échappement chauds (16) fournis à une turbine de gaz d'échappement (6) d'un turbocompresseur de gaz d'échappement (4).
